# EUROPEAN PATENT APPLICATION

(11) **EP 4 391 110 A1**
(43) Date of publication of application: **26.06.2024**
(21) Application number: 22858184.9
(22) Date of filing: 30.06.2022
(51) Int. Cl.: H01M 4/136, H01M 4/13, H01M 4/36, H01M 4/48, H01M 4/58, H01M 4/70

(54) **NEGATIVE ELECTRODE AND METHOD FOR PRODUCING NEGATIVE ELECTRODE**

(30) Priority: 16.08.2021 JP 2021132227
(71) Applicant: SHIN-ETSU CHEMICAL CO., LTD., Tokyo 1000005 (JP)
(72) Inventor: OSAWA, Yusuke, Annaka-shi, Gunma 379-0125 (JP); HIROSE, Takakazu, Annaka-shi, Gunma 379-0125 (JP); MATSUNO, Takumi, Annaka-shi, Gunma 379-0125 (JP)
(74) Representative: Sonnenhauser, Thomas Martin
(86) International application number: PCT/JP2022/026347
(87) International publication number: WO 2023/021861

(57) **Abstract**

The present invention provides a negative electrode including a negative electrode current collector having a surface roughened; and a negative electrode active material layer provided on the negative electrode current collector. The negative electrode active material layer contains negative electrode active material particles including a compound of lithium, silicon, and oxygen, and a ratio, O/Si, of the oxygen to the silicon, constituting the negative electrode active material particles is within a range of 0.8 or more to 1.2 or less. The negative electrode active material layer has a multilayer structure composed of two or more layers, and each layer of the multilayer structure of the negative electrode active material layer has, on an upper portion, a layer containing a quadrivalent silicon compound containing at least one or more of lithium and oxygen. This can provide the negative electrode capable of significantly increasing capacity while maintaining excellent battery characteristics and a method to produce the negative electrode that can produce such a negative electrode.

## Description

### TECHNICAL FIELD

The present invention relates to a negative electrode and a method for producing the negative electrode.

### BACKGROUND ART

In recent years, small electronic devices, typically mobile devices, have become widespread and are being strongly required to further reduce their size and weight and increase their service life. In order to address such market needs, in particular, development of secondary batteries that are small and lightweight and yet can provide a high energy density is being progressed. These secondary batteries are contemplated to find application not only in small electronic devices but also in large electronic devices, typically automobiles, as well as power storage systems as typified by houses.

In particularly, lithium-ion secondary batteries hold great promise because it is easy to make them smaller and increase their capacity and because they also have a higher energy density than that of lead batteries or nickel-cadmium batteries.

The above lithium-ion secondary battery includes positive and negative electrodes, a separator, and an electrolyte liquid. The negative electrode contains a negative electrode active material involved in charging and discharging reactions.

While carbon-based active materials are widely used as the negative electrode active material, recent market needs have called for further improvement in the battery capacity. The use of silicon as a negative electrode active material has been contemplated to improve the battery capacity. This is because silicon has a theoretical capacity (4199 mAh/g) that is more than ten times greater than that of graphite (372 mAh/g) and is thus anticipated to significantly improve the battery capacity. The development of silicon materials for use as negative electrode active materials under contemplation not only includes a simple substance of silicon but also their alloys as well as their compounds as typified by oxides. The active material shapes under contemplation for carbon-based active materials range from a standard application type to an integrated type, in which the material is directly deposited on a current collector.

The use of silicon as a main material of a negative electrode active material, however, expands or shrinks the negative electrode active material during charging and discharging, making the negative electrode active material prone to cracking particularly near its surface layer. In addition, ionic substances are generated inside the active material, which renders this negative electrode active material cracking-prone. Any cracking of the surface layer of the negative electrode active material will create a new surface, increasing the reaction area of the active material. A decomposition reaction of an electrolyte liquid occurs on this new surface, and the new surface is coated with a decomposition product of the electrolyte liquid, so that the electrolyte liquid is consumed. This often leads to degradation in cycle characteristics.

Various investigations into lithium-ion secondary battery negative electrode materials and electrode configurations employing a silicon material as a main material have been made in order to improve the initial battery efficiency and cycle characteristics.

Specifically, a vapor deposition method is used to simultaneously deposit silicon and amorphous silicon dioxide in order to provide good cycle characteristics and high safety (see e.g., Patent Document 1). Also, a carbon material (electronic conductor) is disposed on a surface of silicon oxide particles in order to provide a high battery capacity and high safety (see e.g., Patent Document 2). Further, in order to improve cycle characteristics and provide higher input/output characteristics, an active material containing silicon and oxygen is produced and an active material layer with a higher ratio of oxygen near a current collector is formed (see e.g., Patent Document 3). Further, in order to improve cycle characteristics, a silicon active material is formed such that it contains oxygen at an average oxygen content of 40 at% or less, with a higher oxygen content near a current collector (see e.g., Patent Document 4).

Further, a nanocomposite containing Si-phase, SiO₂, and MyO metal oxide is used to improve the initial charge-and-discharge efficiency (see e.g., Patent Document 5). Further, SiOₓ (0.8 ≤ x ≤ 1.5; the range of particle size: 1 um to 50 um) and a carbon material are mixed and fired at a high temperature to improve cycle characteristics (see e.g., Patent Document 6). Further, in order to improve cycle characteristics, an active material is controlled to have an oxygen-to-silicon molar ratio in the negative electrode active material within the range of 0.1 to 1.2 such that a difference between the maximum and minimum molar ratios near the interface between the active material and a current collector is 0.4 or less (see e.g., Patent Document 7). Further, lithium-containing metal oxide is used to improve battery load characteristics (see e.g., Patent Document 8). Further, a hydrophobic layer such as one made of a silane compound is formed on the surface of a silicon material to improve cycle characteristics (see e.g., Patent Document 9). Further, silicon oxide is used and a graphite coating is formed on its surface layer to provide electric conductivity for improved cycle characteristics (see e.g., Patent Document 10). In Patent Document 10, a Raman spectrum of the graphite coating exhibits broad peaks at shift values of 1330 cm⁻¹ and 1580 cm⁻¹, and their intensity ratio I₁₃₃₀/I₁₅₈₀ satisfies 1.5 < I₁₃₃₀/I₁₅₈₀ < 3. Further, particles having a silicon microcrystal phase dispersed in silicon dioxide are used to provide a high battery capacity and improved cycle characteristics (see e.g., Patent Document 11). Further, silicon oxide with a controlled silicon-to-oxygen atomic ratio of 1 : y (0 < y < 2) is used to improve overcharge-and-overdischarge characteristics (see e.g., Patent Document 12).

As a lithium-ion secondary battery using silicon oxide, Hitachi Maxell, Ltd. started to ship a prismatic secondary battery for a smartphone that adopted a nano-silicon composite in June, 2010 (for example, see Non Patent Document 1). Silicon oxide proposed by Hohl is a composite material with Si⁰⁺ to Si⁴⁺, which has various oxidation states (see Non Patent Document 2). Kapaklis proposes a disproportionation structure that is to be separated into Si and SiO₂ by applying thermal load to silicon oxide (see Non Patent Document 3). Miyachi et al. pay attention to Si and SiO₂, which contribute to charge and discharge, among the silicon oxide having the disproportionation structure (see Non Patent Document 4), and Yamada et al. propose a formula of a reaction between the silicon oxide and Li as follows (see Non Patent Document 5).

2SiO(Si+SiO₂) + 6.85Li⁺ + 6.85e⁻ → 1.4Li_{3.75}Si + 0.4Li₄SiO₄ + 0.2SiO₂

The above reaction formula indicates that Si and SiO₂ constituting silicon oxide react with Li to be separated into a Li silicide and a Li silicate, and partially unreacted SiO₂.

Here, the generated Li silicate, which is irreversible component, is considered to be a stable substance not leasing Li after once formed. A capacity per weight calculated from this reaction formula has a value close to an experimental value, and this reaction formula is recognized as a reaction mechanism of silicon oxide. Kim et al. identify the Li silicate, which is the irreversible component generated with charge and discharge of silicon oxide, as Li₄SiO₄ by using ⁷Li-MAS-NMR and ²⁹Si-MAS-NMR (see Non Patent Document 6).

This irreversible capacity is the weakest point of silicon oxide, and improvement is required. Accordingly, Kim et al. produce a negative electrode having remarkably improved initial efficiency as a battery and being practically usable by using a Li pre-doping method to form the Li silicate in advance (see Non Patent Document 7).

There was also proposed a method of treating a powder, not Li-doping the electrode, to achieve the improvement of the irreversible capacity (see Patent Document 13).

### CITATION LIST

### PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A

### NON PATENT LITERATURE

Non Patent Document 1: Battery Association of Japan, Newsletter "Denchi (battery)", May 1, 2010, p. 10
Non Patent Document 2: A. Hohl, T. Wieder, P. A. van Aken, T. E. Weirich, G. Denninger, M. Vidal, S. Oswald, C. Deneke, J. Mayer, and H. Fuess: J. Non-Cryst. Solids, 320, (2003), 255.
Non Patent Document 3: V. Kapaklis, J. Non-Crystalline Solids, 354 (2008) 612
Non Patent Document 4: Mariko Miyachi, Hironori Yamamoto, and Hidemasa Kawai, J. Electrochem. Soc. 2007 volume 154, issue 4, A376-A380
Non Patent Document 5: M. Yamada, M. Inaba, A. Ueda, K. Matsumoto, T. Iwasaki, T. Ohzuku, J.Electrochem. Soc., 159, A1630 (2012)
Non Patent Document 6: Taeahn Kim, Sangjin Park, and Seung M. Oh, J. Electrochem. Soc. volume 154, (2007), A1112-A1117.
Non Patent Document 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.
Non Patent Document 8: Noboru Sato (ed.) "The Latest Development Trends on Lithium-ion Batteries for xEV", CMC Publishing, November 27, 2020, pp. 96-111.

### SUMMARY OF INVENTION

### TECHNICAL PROBLEM

As described above, small electronic devices, represented by mobile terminals, have been advancing recently toward high performance and multifunction, and a lithium-ion secondary battery, which is the main electric source thereof, is required to increase battery capacity. As a solution to this problem, a lithium-ion secondary battery, including a negative electrode using silicon material as the main material, is desired. Moreover, such a lithium-ion secondary battery using silicon material is desired to have initial charge and discharge characteristics and cycle characteristics almost equivalent to those of a lithium-ion secondary battery using a carbon-based active material. Under these circumstance, the cycle characteristics and initial charge and discharge characteristics have been improved by using, as a negative electrode active material, silicon oxide modified by inserting Li and release a part of Li. In recent years, an irreversible capacity, which is a disadvantage of silicon oxide, has been reduced by pre-incorporating Li in the silicon oxide as the main material and thereby generating Li silicate, and launch of such batteries have actually been started. Even if Li-SiO-C (Non-Patent Document 8), in which Li is used to silicon oxide, is used to replace 100% of a carbon-negative electrode material for producing the battery experimentally, this battery has only a capacity increase in an upper 20% range compared to the battery with the carbon negative electrode material. This means that, given improved performance of small electronic devices (5G etc.) and improved driving range of electric vehicles, further improvement in the battery capacity is required.

The present invention has been made in view of the above-described problem. An object of the present invention is to provide a negative electrode capable of significantly increasing capacity while maintaining excellent battery characteristics and a method to produce a negative electrode that can produce such a negative electrode.

### SOLUTION TO PROBLEM

To achieve the object, the present invention provides a negative electrode comprising:
a negative electrode current collector having a surface roughened; and
a negative electrode active material layer provided on the negative electrode current collector,
wherein the negative electrode active material layer contains negative electrode active material particles including a compound of lithium, silicon, and oxygen,
a ratio, O/Si, of oxygen to silicon constituting the negative electrode active material particles is within a range of 0.8 or more to 1.2 or less,
the negative electrode active material layer has a multilayer structure composed of two or more layers, and
each layer of the multilayer structure of the negative electrode active material layer has, on an upper portion, a layer containing a quadrivalent silicon compound containing at least one or more of lithium and oxygen.

The inventive negative electrode includes the negative electrode active material layer including the negative electrode active material particles having a compound of lithium, silicon, and oxygen, thereby improving a battery capacity. In addition, the inventive negative electrode can make the negative electrode active material layer directly supported on the surface roughened of the negative electrode current collector without such as a binder and a conductive assistant agent, and region in the electrode that is not involved in charge and discharge can be reduced, moreover, excess vacant space can be reduced, and thus, energy density of the electrode can be significantly improved.

In addition, the inventive negative electrode has a ratio, O/Si, of the oxygen to silicon, constituting the negative electrode active material particles within a range of 0.8 or more to 1.2 or less, thereby maintaining excellent battery characteristics.

Moreover, the negative electrode active material layer having a multilayer structure composed of two or more layers can realize a smooth insert of Li while suppressing the decomposition of an electrolyte liquid. Furthermore, each layer of the multilayer structure of the negative electrode active material layer has, on an upper portion, a layer containing a quadrivalent silicon compound containing at least one or more of lithium and oxygen, and this layer can work as a relaxation layer. Since a non-aqueous electrolyte can enter this portion, Li-doping (Li-insertion) is enabled at each level, ion concentration is suppressed, and expansion occurs uniformly. Li desorbing is also enabled at each level; thus, contraction occurs uniformly. As a result, expansion and contraction of the negative electrode due to charge and discharge are mitigated, and a stable negative electrode active material layer can be maintained.

Thus, according to the inventive negative electrode, the capacity can be significantly increased while maintaining excellent battery characteristics and, particularly, excellent cycle characteristics.

The quadrivalent silicon compound preferably includes one or more selected from SiO₂ and Li₄SiO₄.

SiO₂ can mitigate the expansion and contraction of the negative electrode, and Li₄SiO can make charging and discharging proceed more smoothly; thus, the battery characteristics can be further improved by the existence of SiO₂ and Li₄SiO₄.

The negative electrode active material layer preferably comprises:
the negative electrode active material particles; and
a composite compound, in which at least a carbon atom and an oxygen atom are chemically bonded, which is not alloyed with the negative electrode active material particles and which is filled among the negative electrode active material particles and in a surface layer of the negative electrode active material particles.

This composite compound can have a role as a protecting layer, protecting an interface between the negative electrode active material layer and the electrolyte liquid. Thanks to the existence of such a composite compound, the inventive negative electrode can exhibit more excellent cycle characteristics.

The composite compound may be a ring-opening decomposition product of a composite of an ether solvent with a polyphenylene compound or with a polycyclic aromatic compound, or a ring-opening decomposition product of a composite in which Li and the composite of the ether solvent with the polyphenylene compound or with the polycyclic aromatic compound forms a complex.

Such a composite compound can be easily formed in the process of Li-doping of negative electrode active material particles depending on the Li-doping method.

After at least 20 charge and discharge cycles, the negative electrode active material particles preferably have the higher content of Si¹⁺ to Si³⁺ silicon compound states than anything else.

With such a negative electrode, charge and discharge can be performed more smoothly.

It is preferably that when the negative electrode active material particles are defined as primary particles, the negative electrode active material layer forms secondary particles, which are aggregates of the primary particles after charge and discharge, and the secondary particles have a form separated from each other in an in-plane direction.

With such a negative electrode, electrode collapse due to charge and discharge can be prevented more effectively, and a stable negative electrode active material layer can be maintained.

The negative electrode active material particles preferably have a peak attributed to a Si (111) crystal plane obtained by X-ray diffraction by using Cu-Kα radiation before charge and discharge, and a crystallite size corresponding to the crystal plane is 1.0 nm or less.

With such a negative electrode, reactivity with the electrolyte liquid can be suppressed, and the battery characteristics can be further improved.

The negative electrode current collector preferably has a ten-point mean roughness Rz of the surface between 1.5 um or more and 5.0 um or less.

With a negative electrode, including such a negative electrode current collector, not only the negative electrode active material layer can be stably supported, but also the density of the negative electrode active material particles in the negative electrode active material layer can be moderate, resulting in superior battery characteristics.

In addition, the present invention provides an inventive method for producing the negative electrode comprising the steps of:
winding the negative electrode current collector on a can roll having a curvature;
vapor-depositing a film containing silicon and/or silicon monoxide and having a multilayer structure composed of two or more layers on the negative electrode current collector, while the negative electrode current collector is running on the can roll,
forming layers having a multilayer structure and containing silicon dioxide on an upper portion of each layer by spraying a gas containing oxygen onto the film containing silicon and/or silicon monoxide; and
forming the negative electrode active material layer by doping the layers having the multilayer structure with lithium.

With such an inventive method for producing the negative electrode, the inventive negative electrode, capable of increasing the capacity significantly while maintaining battery characteristics, can be produced.

It is preferably that in the step of forming the layers having the multilayer structure, the layers having the multilayer structure are formed such that each layer contains silicon oxide, which includes silicon dioxide,
in the step of forming the negative electrode active material layer, the layer having the multilayer structure is immersed in a solution containing lithium, thereby modifying silicon oxide by a redox method to a compound having the lithium, silicon, and oxygen, and preferably forming a composite compound, in which at least a carbon atom and an oxygen atom are chemically bonded, which is not alloyed with the negative electrode active material particles and which is filled among the negative electrode active material particles and in a surface layer of the negative electrode active material particles.

By forming such a composite compound, the negative electrode, capable of exhibiting more excellent cycle characteristics, can be produced.

### ADVANTAGEOUS EFFECTS OF INVENTION

As described above, the inventive negative electrode can significantly increase the capacity while maintaining excellent battery characteristics when used for the negative electrode of the secondary battery. For example, high initial efficiency, large capacity, high input characteristics, and high cycle characteristics can be obtained when the inventive negative electrode is used for the negative electrode of the second battery.

Moreover, the inventive method for producing the negative electrode can produce the inventive negative electrode that can significantly increase the capacity while maintaining excellent battery characteristics. For example, according to the inventive method for producing the negative electrode, the negative electrode having high capacity and excellent initial charge-and-discharge characteristics while obtaining excellent cycle characteristics when used as the negative electrode of the secondary battery can be produced.

### BRIEF DESCRIPTION OF DRAWINGS

FIG. 1 is a view illustrating a schematic cross-sectional view of a configuration of an example of a negative electrode according to the present invention.
FIG. 2 is a view illustrating a cross-sectional SEM image of an example of a negative electrode according to the present invention.
FIG. 3 is a view illustrating a cross-sectional SEM image of another example of a negative electrode according to the present invention.
FIG. 4 is a view illustrating an exploded view of a configuration example (a laminate film type) of a lithium-ion secondary battery including a negative electrode according to the present invention.
FIG. 5 is a part of an XPS spectrum of a negative electrode active material surface layer in Example 2.
FIG. 6 is another part of an XPS spectrum of a negative electrode active material surface layer in Example 2.
FIG. 7 is a surface SEM image of a negative electrode active material layer after charge and discharge in Example 2.
FIG. 8 is a part of an XPS spectrum of a negative electrode active material layer after 20 cycles of charges and discharges in Example 2.

### DESCRIPTION OF EMBODIMENTS

As described above, as one method to increase the battery capacity of a lithium-ion secondary battery, using a negative electrode with silicon oxide as a main material has been studied for the negative electrode of the lithium-ion secondary battery. The lithium-ion secondary battery using this silicon oxide is desired to have initial charge-and-discharge characteristics that are close to being equivalent to those of the lithium-ion secondary battery using carbon-based active material. In addition, by using Li-doped SiO, which can improve the initial charge-and-discharge characteristics, a significant increase in capacity can be expected, but further improvement of capacity is required for an automotive application.

Thereupon, the present inventors have earnestly studied to obtain the negative electrode that can improve initial charge-and-discharge characteristics and increase battery capacity while obtaining high cycle characteristics when used as the negative electrode for the secondary battery, thereby completing the present invention.

That is, the present invention is a negative electrode comprising:
a negative electrode current collector having a surface roughened; and
a negative electrode active material layer provided on the negative electrode current collector,
wherein the negative electrode active material layer contains negative electrode active material particles including a compound of lithium, silicon, and oxygen,
a ratio, O/Si, of the oxygen to the silicon constituting the negative electrode active material particles is within a range of 0.8 or more to 1.2 or less,
the negative electrode active material layer has a multilayer structure composed of two or more layers, and
each layer of the multilayer structure of the negative electrode active material layer has, on an upper portion, a layer containing a quadrivalent silicon compound containing at least one or more of lithium and oxygen.

Moreover, the present invention is a method for producing the negative electrode comprising the steps of:
winding the negative electrode current collector on a can roll having a curvature;
vapor-depositing a film containing silicon and/or silicon monoxide and having a multilayer structure composed of two or more layers on the negative electrode current collector, while the negative electrode current collector is running on the can roll,
forming layers having a multilayer structure and containing silicon dioxide on an upper portion of each layer by spraying a gas containing oxygen onto the film containing silicon and/or silicon monoxide; and
forming the negative electrode active material layer by doping the layers having the multilayer structure with lithium.

Hereinafter, the present invention will be described in detail. However, the present invention is not limited thereto.

### <Negative Electrode>

To begin with, referring to drawings, a configuration of the inventive negative electrode is described.

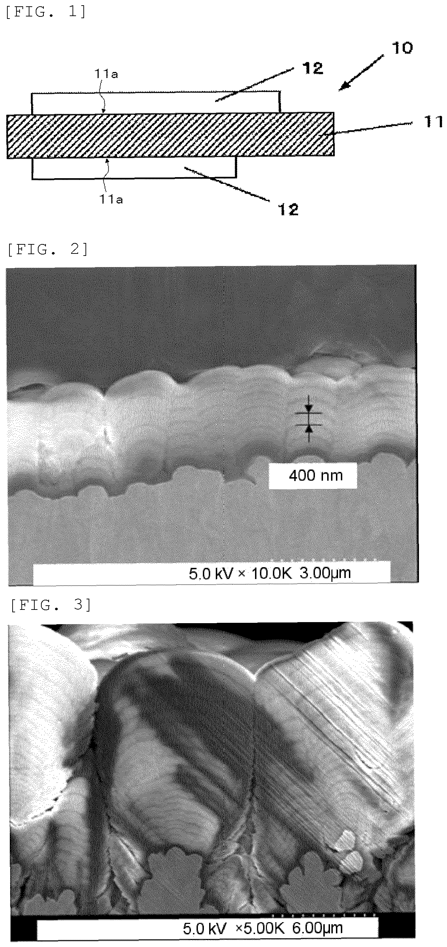

FIG. 1 shows a schematic cross-sectional view of an example of the inventive negative electrode. As shown in FIG. 1, the negative electrode 10 is configured to have a negative electrode current collector 11 and negative electrode active material layers 12 provided on surfaces 11a of this negative electrode current collector 11. This negative electrode active material containing layer 12 may be provided on both surfaces 11a of the negative electrode current collector 11, as shown in FIG. 1, or only on one side of the surfaces 11a.

The surface 11a of the negative electrode current collector 11 is a surface roughened. That is to say, the negative electrode active material layer 12 is provided on the roughened surface 11a of the negative electrode current collector 11.

Hereinafter, the negative electrode current collector 11 and the negative electrode active material layer 12 are described, respectively.

### [Negative Electrode Current Collector]

The negative electrode current collector 11 is made of a material with excellent conductivity and high mechanical strength. Examples of conductive materials that can be used for the negative electrode current collector 11 include copper (Cu) and nickel (Ni). Such conductive materials are preferably those that do not form an intermetallic compound with lithium (Li).

The negative electrode current collector 11 preferably contains carbon (C) or sulfur (S) in addition to its main element because these elements improve the physical strength of the negative electrode current collector. In particular, when the negative electrode includes an active material layer that expands during charging, the current collector containing the above element can inhibit deformation of the electrode including the current collector. The content of each of the above elements is preferably, but not limited to, 100 ppm or less by mass. This is because such content ensures more efficient inhibition of the deformation. Such inhibition of the deformation can further improve the cycle characteristics.

In addition, the surface 11a of the negative electrode current collector 11 needs to be roughened, and preferably, a ten-point mean roughness Rz of the surface is 1.5 um or more and 5.0 um or less. With such a negative electrode 10, including the negative electrode current collector 11 having the surface 11a with such a desirable mean roughness Rz, not only the negative electrode active material layer 12 can be supported more stably but also the density of the negative electrode active material particles in the negative electrode active material layer 12 can be made properly, thereby exhibiting more excellent battery characteristics. The roughened negative electrode current collector 11 includes, for example, a metallic foil subjected to an electrolyzing process, an embossing process, or a chemical etching process.

### [Negative Electrode Active Material Layer]

The negative electrode active material layer 12 of the inventive negative electrode 10 includes the negative electrode active material particles including a compound of lithium, silicon, and oxygen, namely, silicon compound particles containing lithium and oxygen, and the negative electrode active material layer 12 is provided on the negative electrode current collector 11. The negative electrode 10 can be said to have a structure in which the negative electrode active material particles are directly supported on the roughened surface 11a of the negative electrode current collector 11.

The inventive negative electrode 10 can improve battery capacity by containing the negative electrode active material particles, which are silicon compound particles. Moreover, unlike general electrodes, the inventive negative electrode 10 can make the negative electrode active material layer 12 directly supported on the roughened surface 11a of the negative electrode current collector 11 without using such as a binder and a conductive auxiliary agent; thus, a region in the electrode that does not involve charge and discharge can be reduced, and an excess vacant space can be reduced. Consequently, the energy density of the electrode can be significantly improved.

In this way, by using the negative electrode 10 having the negative electrode active material layer 12 that is closely supported, it is possible to increase the energy density of the battery, which cannot be achieved with a powder electrode, for example.

Furthermore, the inventive negative electrode 10 has a ratio, O/Si, of the oxygen and silicon constituting the negative electrode active material particles within a range of 0.8 or more and 1.2 or less. When the ratio O/Si is 0.8 or more, an oxygen ratio is higher than that of simple substance of silicon; thus, cycle characteristics are improved. When the ratio O/Si is 1.2 or less, the resistance of silicon oxide is not too high, thus preferred. Among them, a composition of SiOx with "x" close to 1 is preferred. This is because high cycle characteristics can be obtained. It should be noted that the composition of the silicon compound in the present invention does not necessarily mean 100 % purity but may contain a trace amount of an impurity element.

On the other hand, when the ratio O/Si is less than 0.8, although the capacity is increased, an area in which Si⁰⁺ reacts with the electrolyte liquid is increased, thereby degrading cycle characteristics. Moreover, the ratio O/Si of more than 1.2 results in a loading substance, and also degrades the battery characteristics. The ratio O/Si is a molar ratio and preferably as close to 1 as possible.

In order to introduce Li more smoothly, it is preferred to make the negative electrode active material layer 12 into the multilayer structure composed of two or more layers at the time of forming the negative electrode active material layer 12. The upper limit of number of layers constituting the negative electrode active material layer 12 is not limited. For example, the negative electrode active material layer 12 can have the multilayer structure having layers of 2 or more to 20 or less. This is because the negative electrode active material layer having the multilayer structure composed of two or more layers can realize the smooth insert of Li while suppressing the decomposition of the electrolyte liquid. However, this leads to an increase in a reaction area, and the battery characteristics are insufficient as is.

Therefore, in the inventive negative electrode 10, each layer of the multilayer structure of the negative electrode active material layer 12 has a layer, at the upper portion, having the quadrivalent silicon compound containing at least one or more of lithium and oxygen.

This layer, as a relaxation layer, not only acts for the introduction and desorption of Li but also has an effect of mitigating expansion and contraction during charge and discharge, and thus the battery characteristics can be maintained.

More specifically, a non-aqueous electrolyte can get into this relaxation layer, thus, Li-doping (Li-insertion) is enabled at each level and, additionally, the ion concentration is suppressed, and then expansion occurs uniformly. Li desorption is enabled at each layer; thus, the contraction occurs uniformly. As a result, the expansion and contraction of the negative electrode due to charge and discharge can be mitigated, and a stable negative electrode active material layer can be maintained.

That is, according to the inventive negative electrode 10, a capacity can be significantly increased while maintaining excellent battery characteristics, especially excellent cycle characteristics.

The quadrivalent silicon compound preferably includes one or more selected from SiO₂ and Li₄SiO₄. Because SiO₂ can mitigate the expansion and contraction of the negative electrode, and Li₄SiO₄ can make charging and discharging proceed more smoothly.

Moreover, in the formed negative electrode active material layer 12, the negative electrode active material particles, including the compound of lithium, silicon, and oxygen, can exist adjacent to each other. The inter-particles and the surface layers of the negative electrode active material particles are preferably filled with the composite compound (also referred to as "C, O compound") in which at least a carbon atom and an oxygen atom are chemically bonded and do not alloy with the negative electrode active material particles, i.e., do not react with the negative electrode active material particles.

This composite compound takes a role as a protecting layer to protect an interface between the negative electrode active material layer and the electrolyte liquid. By virtue of filling the above-described composite compound, which acts as the protecting layer to suppress the reaction with the electrolyte liquid, to inter-particles and in the surface of the negative electrode active material particles, the negative electrode active material layer 12 can be proposed in which decomposition of the electrolyte liquid is suppressed, Li is easily introduced, and the battery characteristics are maintained. With the existence of such a composite compound, more excellent cycle characteristics can be exhibited.

In addition, a primary particle of the negative electrode active material particles has the multilayer structure, and the above-described composite compound is also filled between the layers, thereby maintaining the reactivity with the electrolyte liquid.

The composite compound that acts as the protecting layer can be a ring-opening decomposition product of a composite of an ether solvent with a polyphenylene compound or with a polycyclic aromatic compound, or a ring-opening decomposition product of a composite in which Li and the composite of the ether solvent with the polyphenylene compound or with the polycyclic aromatic compound forms a complex.

Such a composite compound can be easily formed in the process of Li-doping of the negative electrode active material particles by using a redox method.

In particular, the composite compound that can act as the protecting layer and has at least the carbon atom and the oxygen atom being chemically bonded preferably contains lithium at least in part. That is to say, the composite compound preferably contains lithium at least in part. By compounding a composite oxide containing the carbon and oxygen with the lithium to allow lithium to be contained thereto in part, the composite exhibits a behavior similar to a kind of solid electrolyte. In particular, making Li permeation is easier than when only carbon and oxygen are included, and thus Li diffusivity can be improved, thereby further improving the battery characteristics.

Moreover, silicon monoxide, represented by typical silicon oxide, is often expressed as a composite having Si of 0 to 4 valences. For example, when a Si2p spectrum of silicon monoxide is obtained by photoelectron spectroscopy, a Si⁰⁺ peak appears around the binding energy of 99 eV, and a Si⁴⁺ peak appears around the binding energy of 103 eV, especially the spectra show that valence 0 state and Si⁴⁺ state attributed to these peaks are dominant. On the other hand, when the negative electrode active material particles containing silicon are directly supported on the surface of the negative electrode current collector 11, a structure of a silicon compound can be changed by controlling a state of a roughened portion of the surface 11a of the negative electrode current collector 11, a temperature of the negative electrode current collector 11 (a substrate on which a substance is to be deposited), a running speed of the negative electrode current collector 11, and gas blowout.

Furthermore, the negative electrode active material particles desirably have silicon in the Si⁰⁺ state and silicon in the Si¹⁺ to Si³⁺ compound states after repeated charges and discharges, for example, at least 20 cycles, and the Si¹⁺ to Si³⁺ compound states having the largest amounts are more desirable. Although the upper limit of the number of charges and discharges to become such a compound state is not particularly limited, the negative electrode active material particles desirably have silicon in the Si⁰⁺ state and silicon in the Si¹⁺ to Si³⁺ compound states after charges and discharges of 20 cycles or more and 50 cycles or less, for example.

The reaction with the electrolyte liquid is facilitated when silicon in the Si⁰⁺ state is dominant. Accordingly, by virtue of make composite of this silicon with silicon oxide in the Si¹⁺ to Si³⁺ valence states (the compound states) to make the structure in which silicon in the Si⁰⁺ state does not direct contact with the electrolyte liquid, discharging is performed smoothly.

The valence state of silicon in the negative electrode active material particles can be judged by subjecting a photoelectron spectrum obtained by the above photoelectron spectroscopy to waveform separation processing and confirming the presence or absence of peaks attributed to each valence state of silicon at the spectrum.

The valence state of silicon in the negative electrode active material layer and the negative electrode active material particles included in the layer can be confirmed by using, for example, a scanning X-ray photoelectron spectrometer PHI Quantera II manufactured by ULVAC-PHI, INCORPORATE. In this case, an X-ray beam diameter can be set to a diameter of 100 um, and a neutralization gun can be used.

The negative electrode active material particles originate from the roughened portion of the surface 11a of the negative electrode current collector 11 and grow by a vapor deposition. When these particles are defined as primary particles, secondary particles, which are an aggregate of the primary particles, are preferably formed after charge and discharge.

This can be controlled by changing the roughened state of the surface 11a of the negative electrode current collector 11; for example, a wider roughened interval results in smaller secondary particle groups, while a narrower roughened interval and the primary particles filled up too densely result in difficulty for generating the secondary particles due to charge and discharge.

The secondary particles desirably have a separated form from each other in the in-plane direction. The stable negative electrode active material layer 12 can be maintained by charging and discharging in this state.

Si⁰⁺, constituting the negative electrode active material layer before charge and discharge, is desirably amorphous (amorphous) as far as possible. Specifically, a crystallite size of Si (111) is desirably 1.0 nm or less. Because of this, the negative electrode active material particles desirably have a peak attributed to a Si (111) crystal plane obtained by X-ray diffraction by using Cu-Kα radiation before charge and discharge, and a crystallite size corresponding to the crystal plane is 1.0 nm or less. When such negative electrode active material particles are included, reactivity with the electrolyte liquid can be suppressed, thereby further improving the battery characteristics. The crystallite size of Si (111) is ideally 0 nm.

A degree of overgrown of Li silicate and the degree of crystallization of Si (e.g., crystallite size corresponding to Si (111) crystal plane) can be confirmed by XRD (X-ray diffraction: X-ray diffraction method). For example, a measurement by the XRD can be performed under the following conditions.

### XRD: D8 ADVANCE manufactured by Bruker Corporation

As for an X-ray diffractometer, for example, D8 ADVANCE manufactured by Bruker Corporation can be used. The X-ray source is Cu-Kα rays. Using an Ni filter, the measurement is taken for 10° to 40° with an output of 40 kV/40 mA, a slit width of 0.3°, a step width of 0.008°, and a counting time of 0.15 seconds per step.

Then, referring to FIG. 2 and FIG. 3, concrete examples of the inventive negative electrode is described in more detail.

Each of FIG. 2 and FIG. 3 is a cross-sectional SEM images of an example of the inventive negative electrodes. Members having elevated potions on the surfaces, shown in lower regions in FIG. 2 and FIG. 3, are negative electrode current collectors with surfaces roughened. The ten-point mean roughness Rz on the surface of the negative electrode current collector shown in FIG. 3 is larger than the ten-point mean roughness Rz on the surface of the negative electrode current collector shown in FIG. 2.

In FIG. 2 and FIG. 3, portions fan-shaped grown, as a center, on elevations on the surface roughened of the negative electrode current collector are the negative electrode active material particles. The negative electrode active material particles configure the negative electrode active material layer having the multilayer structure. In the example shown in FIG. 2, each layer of the negative electrode active material layer has a thickness of about 400 nm. In addition, the negative electrode shown in FIG. 3 has a larger number of layers of the negative electrode active material layers than the negative electrode shown in FIG. 2.

From the SEM images of FIG. 2 and FIG. 3, black streak portions in the upper part of each layer of the negative electrode active material layer can be confirmed. These portions are layers containing the quadrivalent silicon compound containing at least one or more of lithium and oxygen. In these portions, solvent decomposition products have been generated by Li-doping, but vacant spaces, although minute, exist.

Moreover, although it is difficult to see clearly from the SEM images of FIG. 2 and FIG. 3, the composite compound, in which at least the carbon atom and the oxygen atom are chemically bonded, is filled among the particles of the negative electrode active material particles and in a surface layer of the negative electrode active material particles. Thus, the negative electrode that shows the cross sections in FIG. 2 and FIG. 3 is provided with the negative electrode active material layer having the negative electrode active material particles and the composite compound on the negative electrode current collector.

AS clear from the SEM images of FIG. 2 and FIG. 3, the negative electrode active material layer of the inventive negative electrode has very few vacant spaces and contains the negative electrode active material particles, which are densely packed.

### [Method for Producing Negative Electrode]

The inventive method for producing the negative electrode includes the steps of winding the negative electrode current collector on a can roll having a curvature, vapor-depositing a film containing silicon and/or silicon monoxide and having a multilayer structure composed of two or more layers on the negative electrode current collector, while the negative electrode current collector is running on the can roll, forming layers having the multilayer structure and containing silicon dioxide on an upper portion of each layer by spraying a gas containing oxygen onto the film containing silicon and/or silicon monoxide, and forming the negative electrode active material layer by doping the layers having the multilayer structure with lithium.

The inventive method for producing the negative electrode can produce the inventive negative electrode. However, the method which produces the inventive negative electrode is not limited to the inventive producing method described here.

Hereinafter, an example of the inventive method for producing the negative electrode is specifically described, however, the inventive method for producing the negative electrode is not limited to the example described below.

To begin with, the film containing silicon and/or silicon monoxide and having the multilayer structure composed of two or more layers is produced. Here, the film containing silicon and/or silicon monoxide and having the multilayer structure is vapor-deposited on the negative electrode current collector. The film containing silicon can contain silicon particles. The film containing silicon monoxide can contain silicon monoxide particles, which are silicon-compound (silicon oxide) particles containing oxygen. Consequently, the film containing silicon and/or silicon monoxide and having the multilayer structure composed of two or more layers can contain the silicon-contained particles.

The film containing silicon and/or silicon monoxide and having the multilayer structure can be formed, for example, by depositing silicon vapor flow or silicon oxide gas on the negative electrode current collector with the surface roughened, e.g., a roughened foil (for example, roughened copper foil) having a surface ten-point mean roughness Rz of 1.5 um or more and 5.0 um or less (for example, 2.5 um). In the inventive method for producing the negative electrode, the negative electrode current collector is wound on the can roll having the curvature. The curvature (R) of the can roll is preferably 4 m⁻¹ or more and 20 m⁻¹ or less, for example.

An example of a method for forming the film containing silicon and/or silicon monoxide and having a multilayer structure is specifically as follows.

The silicon monoxide film can be film-formed by the following process, for example. Firstly, a raw material that is to generate silicon oxide gas is heated at a temperature of 1100°C or more under reduced pressure and generates silicon oxide gas. In this case, a mixture of metallic silicon powder and silicon dioxide powder can be used as the raw materials. Considering the presence of surface oxygen of the metallic silicon powder and trace oxygen in a reaction furnace, a mixing mole ratio is preferably within a range of 0.9 <metallic silicon powder/silicon dioxide powder <1.2.

Although reducing gas (hydrogen) may be introduced into silicon dioxide gas, introducing enough hydrogen into the vapor at near sonic velocity is difficult.

As a result, the silicon monoxide film is preferably formed by using metallic silicon and silicon dioxide powders as the raw material.

The silicon oxide gas generated as described above is deposited on the surface of the roughened portion of the negative electrode current collector and becomes primary particles having a pillar-shaped structure.

Alternatively, the silicon film can be formed by deposition using metallic silicon, for example.

When the silicon film and/or the silicon monoxide film are formed, the structure of the primary particles can be also altered by changing the roughened structure on the surface of the negative electrode current collector.

Solidification heat during deposition and radiation heat of a heating section facilitate the crystallization of the negative electrode active material layer.

Thereupon, in the inventive method for producing the negative electrode, the film-forming is performed, while the negative electrode current collector is run on the can roll with the curvature. As a result, vapor phase growth with reduced heat load is enabled while preventing the crystallization of Si.

In particular, silicon oxide can be said to be suitable for the formation of the active material by deposition because, unlike silicon, silicon oxide is sublimable and can be deposited quickly, and there is no concern about radiation heat received from molten silicon, which is a problem with the silicon films.

In the inventive method for producing the negative electrode, a multilayer film-form (for example, reciprocating multilayer film-form) is performed on the can roll having the curvature while running the negative electrode current collector, thus a portion of the surface of each layer is deposited at an angle, creating the vacant space.

Deposition can be performed on both surfaces roughened of the negative electrode current collector. For example, deposition can be performed on one roughened surface of the negative electrode current collector, then the negative electrode current collector can be turned over, and deposition can be performed on another roughened surface of the negative electrode current collector.

Gas containing oxygen is sprayed on the film containing silicon and/or silicon monoxide formed as described above, thereby forming the layer having the multilayer structure containing silicon dioxide on the upper portion of each layer.

The gas containing oxygen is not limited as long as oxygen is contained but can be, for example, nitrogen gas containing oxygen.

By spraying the gas containing oxygen, oxygen gets through to the vacant space in the upper portion of each layer, and oxygen can be introduced in each layer. Moreover, this also enables at least part of the silicon and/or silicon monoxide to be converted to silicon dioxide at the upper portion of each layer. In other words, by spraying the gas containing oxygen, the layer of the multilayer structure can be formed, in which each layer contains silicon oxide, including silicon dioxide.

Then, Li is doped (inserted) into the layer having the multilayer structure containing silicon dioxide in the upper portion of each layer produced as described above. Thereby, the negative electrode active material layer including the negative electrode active material particles containing silicon oxide particles with inserted lithium can be obtained. That is to say, in this manner, the silicon oxide particles are modified, and Li compounds are generated inside the silicon oxide particles. The insertion of Li is preferably performed by a redox method.

In the modification by the redox method, to begin with, lithium can be inserted by immersing the negative electrode active material layer containing the silicon oxide material particles into solution-A, where lithium is dissolved into an ether-based solvent, for example. This solution-A may also contain a polycyclic aromatic compound or a linear polyphenylene compound. After inserting lithium, active lithium can be desorbed from the silicon oxide particles by immersing the silicon active material particles into solution-B, which contains the polycyclic aromatic compound or its derivatives. Solvents usable for this solution-B include, for example, ether-based solvents, ketone-based solvents, ester-based solvents, alcohol-based solvents, amine-based solvents, and a mixture thereof. The obtained silicon active material particles may be heat treated in an inert gas after being immersed in the solution-A. Performing the heat treatment can make the Li compound stable. After that, the compound may be cleaned by cleaning methods such as alkaline water in which alcohol or lithium carbonate is dissolved, weak acid, or pure water.

As an ether-based solvent used in the solution-A, such as diethyl ether, tert-butyl methyl ether, tetrahydrofuran, dioxane, 1,2-dimethoxy ethane, diethylene glycol dimethyl ether, triethylene glycol dimethyl ether, tetraethylene glycol dimethyl ether, or mixed solvents thereof may be used. Among these, in particular, tetrahydrofuran, dioxane, and 1,2-dimethoxy ethane may be preferred. These solvents prefer to be dehydrated and deoxygenized.

Further, as the polycyclic aromatic compound contained in the solution-A, one or more kinds of naphthalene, anthracene, phenanthrene, naphthacene, pentacene, pyrene, picene, triphenylene, coronene, chrysene, and derivatives thereof can be used, and, as the linear polyphenylene compound, one or more kinds of biphenyl, terphenyl, and derivatives thereof can be used.

As the polycyclic aromatic compound contained in the solution-B, one or more kinds of naphthalene, anthracene, phenanthrene, naphthacene, pentacene, pyrene, picene, triphenylene, coronene, chrysene, and derivatives thereof can be used.

Further, as the ether-based solvent of the solution-B, such as diethyl ether, tert-butyl methyl ether, tetrahydrofuran, dioxane, 1,2-dimethoxy ethane, diethylene glycol dimethyl ether, triethylene glycol dimethyl ether, and tetraethylene glycol dimethyl ether can be used.

As the ketone-based solvent, acetone, acetophenone, or the like can be used.

As the ester-based solvent, methyl formate, methyl acetate, ethyl acetate, propyl acetate, and isopropyl acetate or the like can be used.

As the alcohol-based solvent, methanol, ethanol, propanol, isopropyl alcohol, or the like can be used.

As an amine-based solvent, methylamine, ethylamine, ethylenediamine, or the like can be used.

When Li-doping is performed on the vacant space generated by the multilayer film-form using the can roll having the curvature, a decomposition product of the solvent is produced, but still small vacant space remains.

Thus, the negative electrode can be obtained, which includes the negative electrode current collector and the negative electrode active material layer having the multilayer structure provided on the negative electrode current collector in which each layer of the multilayer structure of the negative electrode active material layer has, on the upper portion, a layer containing a quadrivalent silicon compound containing at least one or more of lithium and oxygen.

The ratio of oxygen to silicon, O/Si, in which oxygen and silicon constitute the negative electrode active material contained in the negative electrode active material layer, can be adjusted by, for example, a film-form rate at the multilayer film-forming and an amount of oxygen sprayed after the film-formation.

In the above manner, the inventive negative electrode can be produced.

Moreover, the composite compound capable of being filled among the negative electrode active material particles and in a surface layer of the negative electrode active material particles, in which at least the carbon atom and the oxygen atom are chemically bonded, can be formed by, for example, such as ring-opening decomposition of a composite of the ether-based solvent and the polyphenylene compound or the polycyclic aromatic compound in the solution-A, or by the ring-opening decomposition of a composite, in which the above composite forms a complex with lithium (for example, a composite of the polycyclic aromatic compound formed a complex with Li and the ether-based solvent).

In this case, the state of a coating for filling (composite compound) can be controlled by adjusting the temperature of the solvent, the type and concentration of the polyphenylene compound or polycyclic aromatic to be contained in the solvent, and the concentration of the polycyclic aromatic formed a complex with Li.

The composite compound thus produced can also contain a plurality of types of compounds.

That is, in the step of forming the negative electrode active material layer, the layer having the multilayer structure, which is obtained by spraying the gas containing oxygen, is immersed in a solution containing lithium, thereby modifying silicon oxide by a redox method to a compound having the lithium, silicon, and oxygen, and the composite compound can be also formed. This composite compound, in which at least the carbon atom and the oxygen atom are chemically bonded, is not alloyed with the negative electrode active material particles and filled among the negative electrode active material particles and in the surface layer of the negative electrode active material particles.

### <Lithium-ion Secondary Battery>

The inventive negative electrode can be used in a negative electrode in a non-aqueous electrolyte secondary battery, e.g., a lithium-ion secondary battery.

Then, as a concrete example of the non-aqueous electrolyte secondary battery, in which the inventive negative electrode can be used, an example of the laminate film type lithium-ion secondary battery is described.

### [Configuration of Laminate Film Type Secondary Battery]

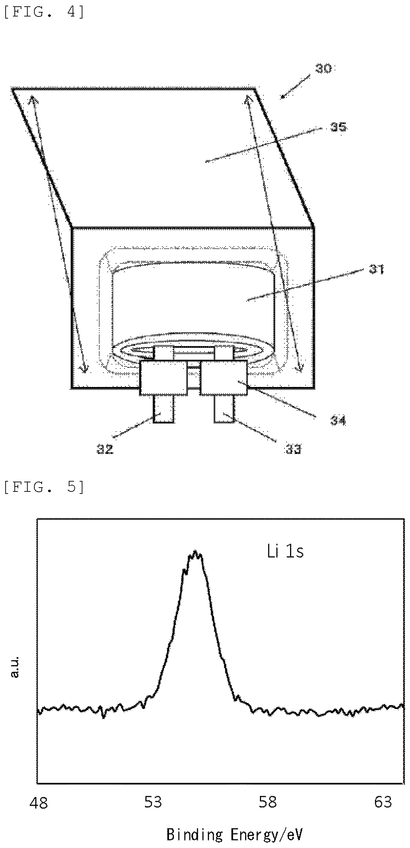

The laminate film type lithium-ion secondary battery 30 shown in FIG. 4 mainly includes a wound electrode body 31 stored inside sheet-shaped exterior member 35. This wound electrode body 31 is formed by winding a positive electrode, the negative electrode, and a separator disposed between these electrodes. There is also a case of storing a laminate having the separator disposed between the positive electrode and the negative electrode without winding. The electrode bodies of both types have a positive electrode lead 32 attached to the positive electrode and a negative electrode lead 33 attached to the negative electrode. The outermost circumference of the electrode body is protected by a protecting tape.

For example, the positive electrode lead 32 and the negative electrode lead 33 are extended outward in one direction from the interior of the exterior member 35. The positive electrode lead 32 is made of, for example, a conductive material such as aluminum, and the negative electrode lead 33 is made of, for example, a conductive material such as nickel or copper.

The exterior member 35 is composed of, for example, laminate films each including a bonding coat, a metal layer, and a surface protection layer laminated in this order. Two laminate films are fused, or bonded with an adhesive or other means, at outer edges of the respective bonding coats such that the bonding coats face the electrode body 31. For example, the portion to be fused is a film such as one made of polyethylene or polypropylene, and the metal portion is aluminum foil. The protection layer is nylon, for example.

Sealing films 34 are inserted in the respective gaps between the exterior member 35 and the positive electrode lead 32 and between the exterior member 35 and the negative electrode lead 33 to prevent entry of outside air. The sealing film is made of, for example, polyethylene, polypropylene, or polyolefin resin.

Hereinafter, each member is described, respectively.

### [Positive Electrode]

The positive electrode has a positive electrode active material layer disposed on both surfaces or one surface of a positive electrode current collector, as in the negative electrode 10 shown in FIG. 1, for example.

The positive electrode current collector is formed by, for example, a conductive material such as aluminum.

The positive electrode active material layer contains any one kind or two kinds or more of positive electrode materials (positive electrode active material) capable of occluding and releasing lithium ions and may contain a positive electrode binder, a positive electrode conductive auxiliary agent, a dispersing agent, or other materials, according to design.

The positive electrode material is preferably a lithium-containing compound. Examples of this lithium-containing compound include a composite oxide composed of lithium and a transition metal element or a phosphate compound containing lithium and a transition metal element. Among these positive electrode materials, a compound containing at least any one of nickel, iron, manganese, and cobalt is preferable. The chemical formula of this compound is expressed by, for example, LiₓM1O₂ or Li_{y}M2PO₄, where M1 and M2 represent at least any one of the transition metal elements. In this formula, "x" and "y" represent a value varied depending on the state of charge-and-discharge of a battery, which typically satisfy 0.05 ≤ x ≤ 1.10 and 0.05 ≤ y ≤ 1.10.

As examples of a composite oxide containing lithium and a transition metal element, such as a lithium cobalt composite oxide (LiₓCoO₂), a lithium nickel composite oxide (LiₓNiO₂), and a lithium nickel cobalt composite oxide can be mentioned. As examples of the lithium nickel cobalt composite oxide, such as lithium nickel cobalt aluminum composite oxide (NCA) and lithium nickel cobalt manganese composite oxide (NCM), can be mentioned.

As examples of phosphate compounds containing lithium and a transition metal element, such as a lithium iron phosphate compound (LiFePO₄) and a lithium iron manganese phosphate compound (LiFe₁₋ᵤMnᵤPO₄ (0 < u < 1)), can be mentioned. By virtue of using these positive electrode materials, high battery capacity as well as excellent cycle characteristics can be obtained.

As the positive electrode binder, for example, any one or more of polymer materials, synthetic rubber, can be used. Polymer materials are, for example, polyvinylidene fluoride, polyimide, polyamideimide, aramid, polyacrylic acid, polyacrylic acid lithium, sodium polyacrylate, and carboxymethyl cellulose. Synthetic rubbers include styrene-butadiene rubber, fluorinated rubber, and ethylene propylene diene, for example.

As the positive electrode conductive auxiliary agent, for example, any one or more of carbon materials, such as carbon black, acetylene black, graphite, ketjen black, carbon nanotube, and carbon nanofiber, can be used.

### [Negative Electrode]

The inventive negative electrode is used as the secondary battery's negative electrode. The negative electrode, which configures this secondary battery, preferably has a negative electrode charge capacity larger relative to the electrical capacitance (charge capacity as a battery) provided by the positive electrode active material agent. As a result, the precipitation of lithium metal on the negative electrode can be suppressed.

In this example, the positive electrode active material layers are provided partially on both faces of the positive electrode current collector, and, similarly, the negative electrode active material layers of the present invention are also provided partially on both faces of the negative electrode current collector. In this case, for example, the negative electrode active material layers provided on the negative electrode current collector are preferably provided with a region where the opposite positive electrode active material layers are not present. This is to design a stable battery.

The non-facing region described above, at which the positive electrode active material layer and negative electrode active material layer do not face one another, is hardly affected by charging and discharging. The state of the negative electrode active material layers is consequently retained from just after the formation. This enables investigation of the composition of the negative electrode active material with excellent reproducibility and high precision without dependence on the presence or absence of charge and discharge.

### [Separator]

The separator separates the lithium metal or the positive electrode from the negative electrode so as to prevent short circuits due to contact of both electrodes while passing lithium ions through. This separator may be made of, for example, a porous film of synthetic resin or ceramics and may have a laminated structure in which two or more porous films are laminated. Examples of synthetic resin include polytetrafluoroethylene, polypropylene, and polyethylene.

### [Electrolyte Liquid]

At least a part of each positive electrode active material layer and the negative electrode active material layer, or the separator, is impregnated with a liquid non-aqueous electrolyte (an electrolyte liquid). This electrolyte liquid contains electrolyte salt dissolved in a solvent and may contain other materials such as additives.

The solvent can be, for example, a non-aqueous solvent. Examples of non-aqueous solvents include ethylene carbonate, propylene carbonate, butylene carbonate, dimethyl carbonate, diethyl carbonate, ethylmethyl carbonate, methylpropyl carbonate, 1,2-dimethoxyethane, and tetrahydrofuran. Among these, at least any one of ethylene carbonate, propylene carbonate, dimethyl carbonate, diethyl carbonate, or ethylmethyl carbonate is preferably used. This is because such solvent enables better characteristics. In this case, more advantageous characteristics can be obtained by combining high-viscosity solvents such as ethylene carbonate or propylene carbonate with low-viscosity solvents such as dimethyl carbonate, ethylmethyl carbonate, or diethyl carbonate. This is because the dissociation and ion mobility of electrolyte salts are improved.

In particular, the solvent desirably contains at least any one of the halogenated chain carbonate ester or halogenated cyclic carbonate ester. Thereby, a stable coating is formed on the surface of the negative electrode active material at charge-and-discharge, particularly charging. In this case, the halogenated chain carbonate ester is a chain carbonate ester having halogen as a constituent element (at least one hydrogen is substituted by halogen). In addition, the halogenated cyclic carbonate ester is cyclic carbonate ester having halogen as a constituent element (that is, at least one hydrogen is substituted by halogen).

The halogen type is preferably, but not limited to, fluorine, for fluorine enables the formation of a better coating than other halogens. A larger number of halogens is better, for the coating obtained is more stable, and a decomposition reaction of an electrolyte liquid is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolane-2-one and 4,5-difluoro-1,3-dioxolane-2-one.

The solvent additive preferably contains a cyclic carbonate ester having unsaturated carbon bond, for this enables the formation of a stable coating on the surface of the negative electrode at charge-and-discharge and suppressing a decomposition reaction of the electrolyte liquid. Examples of the unsaturated carbon bond cyclic carbonate ester include vinylene carbonate and vinyl ethylene carbonate.

In addition, the solvent additive preferably contains sultone (cyclic sulfonic acid ester), for this enables improvement of a battery's chemical stability. Examples of sultone include propane sultone and propene sultone.

In addition, the solvent preferably includes acid anhydride, for this enables improvement of an electrolyte's chemical stability. Examples of acid anhydride include propane disulfonic acid anhydride.

The electrolyte salt can contain, for example, at least any one or more of light metal salts, such as lithium salt. Examples of lithium salt include lithium hexafluorophosphate (LiPF₆) and lithium tetrafluoroborate (LiBF₄).

The content of the electrolyte salt relative to the solvent is preferably 0.5 mol/kg or more and 2.5 mol/kg or less. This is because high ionic conductivity can be obtained.

### [Method of Producing Laminate Film Type Secondary Battery]

The laminate film type secondary battery described above can be produced according to a following procedure, for example.

Firstly, the positive electrode is produced with the above positive electrode material. A positive electrode mixture is created by mixing the positive electrode active material with, as necessary, the positive electrode binder, the positive electrode conductive auxiliary agent, and other materials. Then, the mixture is dispersed in an organic solvent to form a slurry of the positive electrode mixture. The mixture slurry is then applied to a positive electrode current collector with a coating apparatus, such as a die coater having a knife roll or a die head and dried by hot air to obtain the positive electrode active material layer. The positive electrode active material layer is finally subjected to compression-molding with, for example, a roll press. In this case, heating may be performed, and the compression may be repeated multiple times.

Secondly, the negative electrode active material layer is formed on the negative electrode current collector to produce the negative electrode through the same procedure as in the above production of the negative electrode 10.

In producing the positive electrode and the negative electrode, the active material layers are formed on both faces of each of the positive and the negative electrode current collectors, respectively. For each electrode, the active materials applied to both sides of the current collector may have different lengths (see FIG. 1).

Then, the electrolyte liquid is prepared. Then, with ultrasonic welding and so on, the positive electrode lead 32 is attached to the positive electrode current collector, and the negative electrode lead 33 is attached to the negative electrode current collector. The positive and negative electrodes and the separator interposed therebetween are stacked and then wound to produce the wound electrode body 31, and a protecting tape is stuck to the outermost circumference of the body 31. Then, the wound electrode body 31 is molded to form a flat shape. The wound electrode body 31 is then sandwiched between the folded film-shaped exterior member 35, and insulating portions of the exterior member are stuck to one another by heat sealing, thereby the wound electrode body 31 is encapsulated with one direction is released. The close adhesion films 34 are inserted between the exterior member 35 and each of the positive electrode lead 32 and the negative electrode lead 33. The prepared electrolyte liquid described above is introduced from the released side in a prescribed amount to perform the impregnation of the electrolyte liquid under a vacuum. The released side is stuck by vacuum heat sealing after the impregnation. In this manner, the laminate film type secondary battery 30 can be produced.

In a non-aqueous electrolyte secondary battery such as the laminate film type secondary battery 30 produced above, a utilization ratio of the negative electrode during charge and discharge is preferably between 93% or more and 99% or less. When the utilization ratio of the negative electrode is in the range of 93% or more, an initial charge efficiency does not decrease, and battery capacity can be greatly improved. In addition, when the utilization ratio of the negative electrode is in the range of 99% or less, Li precipitation will not occur, and safety can be ensured.

### EXAMPLES

Hereinafter, the present invention will be specifically described with reference to Examples and Comparative Examples. However, the present invention is not limited thereto.

### (Comparative Example 1)

The graphite negative electrode was test-produced. This is because the capacity on the use of a graphite negative electrode was defined as the reference.

The negative electrode of Comparative Example 1 was formed by mixing synthetic graphite : conductive auxiliary agent (acetylene black) : SBR (styrene-butadiene rubber) : CMC (carboxymethylcellulose) in a ratio of 95.7 mass% : 1 mass% : 1.8 mass% : 1.5 mass%.

### (Comparative Example 2)

An electrode was produced by using a powdered Li-doped SiO with a carbon coating (expressed as "Li-SiO-C").

The electrode of Comparative Example 2 was produced by mixing Li-SiO-C : PAA-Na (sodium polyacrylate) : conductive auxiliary agent (acetylene black) in a ratio of 90 mass% : 8 mass% : 2 mass%.

Li-Si-O was prepared by the following procedure. First, a SiO block was produced by mixing the silicon and the silicon dioxide as raw materials, vaporizing the mixture at 1300°C, depositing on a substrate for deposition, and quenching. The SiO block was pulverized to a median diameter of 7 um and then Li-doped by using a redox method. After doping, a sample was heat-treated to stabilize Li silicate.

### (Comparative Examples 3 to 7, and Examples 1 to 4)

In Comparative Examples 3 to 7 and Examples 1 to 4, negative electrodes were produced by following the procedure. In these Examples, copper foils having a roughened surface of the surface ten-point mean roughness (roughness) Rz of 2.5 um were used as negative electrode current collectors.

### [Production of Negative Electrode Precursor]

### (Example 1 and Comparative Example 5)

In each of Example 1 and Comparative Example 5, gravelly metallic silicon was placed in a carbon crucible, and the silicon was melted and vaporized by using an electron gun under a vacuum. Using an apparatus capable of running, the copper foil having roughened surfaces (to be a negative electrode current collector) was wound on a can roll having a curvature R of 10 m^{-1,} then a silicon film having five-layer structures was formed on the copper foil having the surfaces roughened while reciprocated-running the copper foil having the roughened surface on the can roll.

In each of Example 1 and Comparative Example 5, nitrogen gas containing oxygen was sprayed to the silicon film after the film-forming of the silicon films having the five-layer structure, thereby forming a multilayer-structure layer containing silicon dioxide on the upper portion of each layer.

It should be noted that, in Example 1 and Comparative Example 5, a film-forming rate and an amount of oxygen sprayed after the film-forming was adjusted so as to make a ratio of silicon to oxygen, O/Si, a value described in Table below, in which O/Si constituted negative electrode active material particles that were finally obtained.

In this way, negative electrode precursors of Example 1 and Comparative Example 5 were produced.

### (Comparative Example 3)

In Comparative Example 3, a silicon film having a five-layer was film-formed as in Example 1, but nitrogen gas containing oxygen was not sprayed afterward.

Thus, a negative electrode precursor of Comparative Example 3 was produced.

### (Comparative Example 4)

In Comparative Example 4, metallic silicon and silicon dioxide were placed in a carbon crucible, and then vapor was extracted with heating at 1200°C in an atmosphere with the degree of vacuum of 10⁻² Pa. The vapor was directly supported on a copper foil having a roughed surface as in Comparative Example 3.

Thus, a negative electrode was obtained in which the electrode included the copper foil having the surface roughened and negative electrode active material layer containing silicon oxide provided on the copper foil having surfaces roughened.

### (Examples 2 and 3, and Comparative Example 6)

In each of Examples 2 and 3, and Comparative Example 6, as in Comparative Example 4, a raw material which is a mixture of metallic silicon and silicon dioxide, was introduced into a furnace and vaporized in an atmosphere with the degree of vacuum of 10⁻² Pa. Using an apparatus capable of running, the copper foil having roughened surface (to be a negative electrode current collector) was wound on a can roll having a curvature R of 10 m⁻¹ and then a silicon monoxide film having a five-layer structure was formed on the copper foil having the surfaces roughened while reciprocated-running the copper foils having the surfaces roughened on the can roll.

In each of Examples 2 and 3 and Comparative Example 6, nitrogen gas containing oxygen was sprayed to silicon monoxide after the film-forming of the silicon monoxide film having the five-layer structure, thereby forming a multilayer-structure layer containing silicon dioxide on the upper portion of each layer.

It should be noted that, in each of Example 3 and Comparative Example 6, a film-forming rate was adjusted, and the film-forming was performed while hydrogen or oxygen was sprayed into the vapor as needed, so as to make a ratio of silicon to oxygen, O/Si, a value described in Table below, in which oxygen and silicon were constituted negative electrode active material particles that were finally obtained. Moreover, in each of Examples 2 and 3, and Comparative Example 6, an amount of sprayed oxygen after film-forming was adjusted, so as to make a ratio of silicon to oxygen, O/Si, a value described in Table below, in which oxygen and silicon constituted negative electrode active material particles that were finally obtained.

Thus, negative electrode precursors of Examples 2 and 3 and Comparative Example 6 were produced.

### (Example 4 and Comparative Example 7)

In Example 4, a negative electrode precursor of Example 4 was produced as in Example 2 except that a multilayer-film having twenty layers was formed by controlling a film-form rate. In Comparative Example 7, a negative electrode precursor of Comparative Example 7 was produced as in Example 2 except that a single-layer film having a single layer was formed without running the roughened copper foil.

### [Lithium Insertion and Filled Layer Formation]

### (Examples 1 to 4, and Comparative Examples 3 and 5 to 7)

Negative electrode precursors, obtained in Examples 1 to 4, and Comparative Examples 3, and 5 to 7, were taken out after sufficiently cooled, and modified by inserting lithium into the silicon compound by a redox method using an ether-based solvent in which water content was reduced to 50 ppm by mass. As a result, the respective negative electrodes of Examples 1 to 4, and Comparative Examples 3, and 5 to 7, including negative electrode active material layers after lithium insertion, were obtained.

The negative electrode active material layers after lithium insertion obtained in Examples 1 to 4, and Comparative Examples 3, and 5 to 7 were observed by a scanning electron microscope (SEM), and interlayers of the negative electrode active material layers in Examples 1 to 4, and Comparative Examples 3, and 5 and 6 were confirmed to be darkened. At an upper portion of single layer of the negative electrode active material layer of Comparative Example 7 was also confirmed to have an existence of a darkened portion. The darkened portions were more easily chargeable portions, indicating that the portions was a layer having a high amount of silicon in quadrivalent state to which the silicon has been oxidized. Moreover, the negative electrode active material layers after lithium insertion obtained in Comparative Example 7, Examples 1 to 4, and Comparative Examples 3, and 5 to 7, were analyzed by an X-ray photoelectron spectroscopy (XPS) to confirm the presence of filled layers containing composite compounds, in which a carbon atom and an oxygen atom were chemically bonded and to determine valence states of silicon on the surfaces of the negative electrode active material particles and ratios, O/Si, of oxygen to silicon constituting the negative electrode active material particles.

As a result, each of the negative electrode active material layers after lithium insertion, obtained in Examples 1 to 4, and Comparative Examples 3, and 5 to 7, was found to have the negative electrode active material particles including compounds of lithium, silicon, and oxygen, and the filled layers containing the composite compound, in which the carbon atom and the oxygen atom were chemically bonded, which is filled among the negative electrode active material particles and in a surface layers of the negative electrode active material particles.

Furthermore, as a result of XPS analyses, in each of the negative electrodes of Examples 1 to 4, it was confirmed that a part of the composite compound, in which the carbon atom and the oxygen atom were chemically bonded, contained lithium.

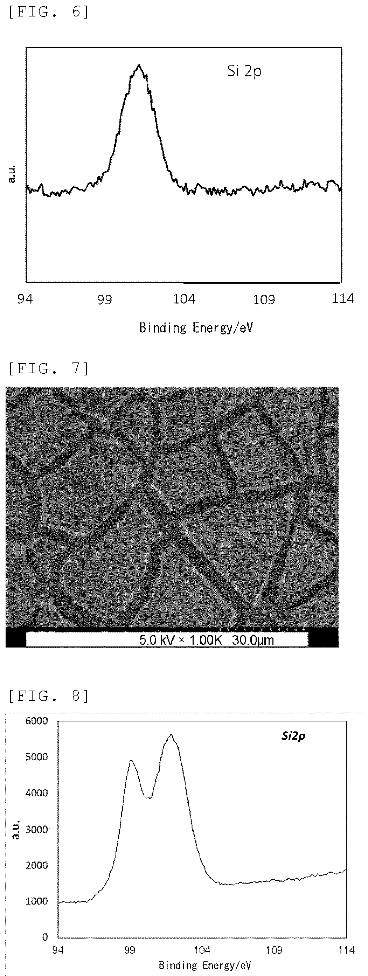

In addition, XPS spectra of Example 2 shown in FIG. 5 and FIG. 6, more precisely, a peak around 55 eV in the XPS spectrum of Li 1s (FIG. 5) and a peak around 101 eV in the XPS spectrum of Si 2p (FIG. 6), indicate the presence of a layer containing a quadrivalent Si compound containing lithium and oxygen in the surface portion (upper portion) of each layer of the negative electrode active material layer in Example 2. Thereby, the presence of SiO₂ and Li₄SiO₄ was confirmed. It is also confirmed that, in each of the negative electrodes of Examples 1 and 3, there is a layer containing the quadrivalent Si compound containing lithium and oxygen in the upper portion of each layer of the negative electrode active material layer.

SEM observation and the XPS analysis were performed on the negative electrodes of Comparative Examples 3 to 7, as in Example 1. These results are summarized in Table 1 below.

### (Example 5)

In Example 5, a Li-inserted electrode was obtained as in Example 2, then cleaned with ether containing 10% water and removed the filled layer on the surface. Thus, a negative electrode of Example 5 was obtained.

### (Examples 6 to 8)

In Examples 6 to 8, each negative electrode was produced as in Example 2 except that film-formation was performed while adjusting film-forming distances, film-forming rates, running speeds of copper foil and an aperture, in which a deposition flow was in contact, so as to result in crystallite sizes attributed to an Si (111) crystal plane contained in the negative electrode active material particles as values shown in Table 2 below.

### (Example 9 to 14)

In Examples 9 to 14, each negative electrode was produced as in Example 2, except that roughness Rz of a copper foils having surface roughened was changed within a range from 0.5 um to 7 um, as shown in Table 2 below.

SEM observations and XPS analyses were performed to the negative electrodes of Examples 5 to 14 as in Example 2. These results are summarized in Table 2 below.

The results indicate that each of the negative electrode active material layers after lithium insertion, obtained in Examples 5 to 14, includes negative electrode active material particles including a compound of lithium, silicon, and oxygen; a filled layer containing a composite compound, in which a carbon atom and an oxygen atom were chemically bonded, which was filled among particles of the negative electrode active material and in a surface layer of the negative electrode active material. It was also indicated that ratios, O/Si, of the oxygen to the silicon constituting the negative electrode active material particles were within a range of 0.8 or more to 1.2 or less. Moreover, it was confirmed that the negative electrode active material layers of the negative electrodes in Examples 5 to 14 had a five-layer structure as in Example 2, and a layer containing a quadrivalent Si compound containing lithium and oxygen existed at an upper portion of each layer.

Furthermore, a result of the XPS analysis indicated that the composite compound, in which the carbon atom and the oxygen atom were chemically bonded to each other, contained lithium in some of the portions in each of the negative electrodes of Examples 6 to 14.

### [Assembling Coin Battery for Testing]

Subsequently, ethylene carbonate (EC), and dimethyl carbonate (DMC), were mixed to prepare a non-aqueous solvent, followed by dissolving an electrolyte salt (lithium hexafluorophosphate: LiPF₆) into this non-aqueous solvent to prepare the electrolyte liquid (non-aqueous electrolyte). In this case, the solvent composition was set to EC : DMC = 30 : 70 in a volume ratio, and the content of the electrolyte salt was set to 1 mol/kg relative to the solvent. As an additive, fluoroethylene carbonate (FEC) was added at 2.0 mass%.

Next, coin batteries for an initial efficiency test were assembled as follows. First, Li foils having a thickness of 1 mm were punched to a piece having a diameter of 16 mm and the piece was attached to aluminum clads.

Then, the negative electrodes obtained beforehand were punched to a piece having a diameter of 15 mm, the piece was faced with the Li foils attached to the aluminum clads via separators, and after electrolyte liquid injection, 2032 coin batteries were produced.

### [Measurement of Initial Efficiency]

An initial efficiency was measured under the following conditions. First, for the produced coin batteries for the initial efficiency test, the charging (first charge) was performed in CCCV mode at a charge rate corresponding to 0.03 C. The CV was 0 V, and the termination current was set to 0.04 mA. Then, CC discharge (first discharge) was carried out by making the discharge rate at 0.03 C as well, and discharge termination voltage at 1.2 V.

To investigate initial charge-and-discharge characteristics, the first efficiency (hereinafter, may be referred to as an initial efficiency) was calculated. The initial efficiency was calculated from the equation shown by Initial Efficiency (%) = (First Discharge Capacity / First Charge Capacity) × 100.

### [Production of Lithium Secondary Battery and Battery Evaluation]

From the initial data obtained, a counter-positive electrode was designed to achieve a utilization ratio of 95% for a negative electrode. Based on the following equation, the utilization ratio was calculated from positive and negative electrode capacities obtained with Li of a counter electrode. Utilization Ratio = (Positive Electrode Capacity - Negative Electrode Loss) / (Negative Electrode Capacity - Negative Electrode Loss) × 100

Each lithium secondary battery of the Examples and Comparative Examples was produced based on this design. Each lithium secondary battery of Examples and Comparative Examples was subjected to battery evaluation.

The cycle characteristics were investigated as follows. First, for battery stabilization, two cycles of charging and discharging were performed at 0.2 C under an atmosphere of 25°C, and the discharge capacity at the second cycle was measured. The battery cycle characteristics started from the discharge capacity at the third cycle were calculated, and the battery test was stopped at 100 cycles. The charging and discharging were performed at charging rate of 0.7 C and discharge rate of 0.5 C. The charge voltage was 4.3 V, the discharge termination voltage was 2.5 V, and the charge termination rate was 0.07 C.

The discharge capacity of the second cycle measured in the cycle characteristics test was taken as the capacity achieved by each negative electrode.

The cycle characteristics (capacity retention up to 100 cycles) of each negative electrode in Examples and Comparative Examples, the initial efficiencies, and capacity increase rates, relative to Comparative Example 1 as a reference, were summarized in Table 1 and Table 2 below.

### [SEM Observation of on Surface of Negative Electrode Active Material Layer After Charge and Discharge]

The negative electrode active material layer of the negative electrode of Example 2 after charge and discharge was observed by using a scanning electron microscope (SEM). An SEM image of the negative electrode active material layer of the negative electrode of Example 2 after charge and discharge (state after discharge) was shown in FIG. 7.

As shown in FIG. 7, in the negative electrode active material layer of the negative electrode of Example 2 in the state after discharge, small particles, i.e., the primary particles aggregated to form the secondary particles. Moreover, the secondary particles were separated from each other in the in-plane direction. Visible portions among the secondary particles were parts of the surface of the negative electrode current collector.

By the observation of the negative electrode active material layers of the negative electrodes of Example 1 and 3 to 14 after charge and discharge with the SEM, SEM images as in FIG. 7 were obtained.

### [XPS Spectrum after 20 cycles of Charge-and-Discharge]

The negative electrode of Example 2 was been charged and discharged for 20 cycles, then subjected to the XPS analysis. A part of the XPS spectrum obtained is shown in FIG. 8.

As shown in FIG. 8, the XPS spectrum of the negative electrode active material layer of the negative electrode of Example 2 after charges and discharges for 20 cycles included a peak attributed to silicon in a state of 0 valence near 99eV, and a broad peak attributed silicon in a state of Si¹⁺ to Si³⁺ compound with a vertex near 101.9 eV.

### [XRD Analysis of Negative Electrode Active Material Particles]

The negative electrode active material particles contained in the negative electrode active material layers of each negative electrode were analyzed by the XRD. The crystallite size corresponding to the Si (111) crystal plane contained in the negative electrode active material particles was calculated from the peaks attributed to the Si (111) crystal plane based on a Scherrer formula. The results are summarized in Table 1 and Table 2 below. It should be noted that, in each of the negative electrode active material particles in Examples 1 to 5, 9 to 14, and Comparative Examples 3 to 7, Si was amorphous.

**[Table 1]**

| | Capacity Retention up to 100 cycles (%) | Initial Efficiency (%) | Capacity Increase Rate per Volume (%) | Filled Layer (Composite Compound) | O/Si Ratio | Layer Structure | Si Crystallinity | Cu Roughness (*µ* m) |
|---|---|---|---|---|---|---|---|---|
| Comparative Example 1 | 95 | 94.0 | 0.0 | Non-existence (Graphite) | - | - | - | - |
| Comparative Example 2 | 92 | 90.1 | 28.0 | Existence (Powdered Li-SiO-C) | 1 | - | - | - |
| Comparative Example 3 | 41 | 91.0 | 41.0 | Existence | 0.1 | 5 | Amorphous | 2.5 |
| Comparative Example 4 | 89 | 71.0 | 18.0 | Non-existence (Compound of silicon and oxygen) | 1 | 5 | Amorphous | 2.5 |
| Comparative Example 5 | 84 | 88.8 | 37.0 | Existence | 0.7 | 5 | Amorphous | 2.5 |
| Example 1 | 87 | 90.3 | 37.0 | Existence | 0.8 | 5 | Amorphous | 2.5 |
| Example 2 | 93 | 90.3 | 37.0 | Existence | 1 | 5 | Amorphous | 2.5 |
| Example 3 | 90 | 89.8 | 37.0 | Existence | 1.2 | 5 | Amorphous | 2.5 |
| Comparative Example 6 | 84 | 89.1 | 37.0 | Existence | 1.3 | 5 | Amorphous | 2.5 |
| Comparative Example 7 | 73 | 90.1 | 43.0 | Existence | 1 | 1 | Amorphous | 2.5 |
| Example 4 | 94 | 90.4 | 36.0 | Existence | 1 | 20 | Amorphous | 2.5 |

**[Table 2]**

| | Capacity Retention up to 100 cycles (%) | Initial Efficiency (%) | Capacity Increase Rate per Volume (%) | Filled Layer (Composite Compound) | O/Si Ratio | Layer Structure |
|---|---|---|---|---|---|---|
| Example 5 | 87 | 88.3 | 37.0 | Non-existence | Amorphous | 2.5 |
| Example 6 | 91 | 90.2 | 37.0 | Existence | 1 nm | 2.5 |
| Example 7 | 89 | 90.1 | 37.0 | Existence | 2 nm | 2.5 |
| Example 8 | 86 | 90.2 | 37.0 | Existence | 3 nm | 2.5 |
| Example 9 | 87 | 90.2 | 37.0 | Existence | Amorphous | 1 |
| Example 10 | 90 | 90.1 | 37.0 | Existence | Amorphous | 1.5 |
| Example 11 | 91 | 90.2 | 37.0 | Existence | Amorphous | 2 |
| Example 12 | 93 | 90.2 | 37.0 | Existence | Amorphous | 3 |
| Example 13 | 91 | 90.2 | 37.0 | Existence | Amorphous | 5 |
| Example 14 | 86 | 90.1 | 37.0 | Existence | Amorphous | 7 |

### [Results]

In Table 1 and Table 2, shown above, an increase rate of a discharging capacity (Wh/L) per volume relative to Comparative Example 1 is shown as a capacity increase rate.

As clear from Table 1 and Table 2, the negative electrodes of Examples 1 to 14 were proved to be capable of significantly increase the capacity than a graphite electrode of Comparative Example 1 while maintaining the battery characteristics (the cycle characteristics and the initial efficiency).

On the other hand, the negative electrode of Comparative Example 2, produced using a powdered Li-doped SiO, had a lower capacity than the electrodes of Examples 1 to 14. This is considered that the negative electrode of Comparative Example 2, in which powder instead of deposition was used, contains a binder, which is not involved in charging and discharging, and also a number of excess vacant space.

In addition, the negative electrode of Comparative Example 3 had significantly lesser cycle characteristics than the electrodes of Examples 1 to 14. In Comparative Example 3, the silicon film having a five-layer structure was not sprayed with the gas containing oxygen. Consequently, each layer of the negative electrode active material layer of the negative electrode of Comparative Example 3 lacked, on an upper portion, the layer containing a quadrivalent silicon compound containing at least one or more of lithium and oxygen. Because of this, in the negative electrode of Comparative Example 3, it is considered that an ion concentration occurred in part of the negative electrode active material layer during charge and discharge, thus the negative electrode was degraded due to an expansion and contraction of the negative electrode caused by charge and discharge.

Comparative Example 4 had a lower capacity increase rate per volume than Examples 1 to 14. This may be caused by the fact that in Comparative Example 4, Li insertion was not performed in silicon oxide.

Comparative Examples 5 and 6, and Examples 1 to 3 were examples in which an amount of oxygen in a bulk (oxygen ratio O/Si) was adjusted.

As the silicon oxide is formed from the silicon and the silicon dioxide, increasing or decreasing an amount of oxygen is difficult. In addition, the silicon oxide with a ratio O/Si of 0.7 (Comparative Example 5) was unable to control the valence, resulting in a significant silicon element remaining.

To achieve even lower oxygen content, not only to introduce hydrogen into vapor to actively reduce, but also to significantly reduce the film-form rate.

The negative electrode of Comparative Example 5 had lower cycle characteristics than the negative electrodes of Examples 1 to 3, as a result of making the oxygen ratio O/Si 0.7. This is considered that making the oxygen ratio O/Si 0.7 in the negative electrode of Comparative Example 5 caused an area of Si having valence of 0, which reacts with the electrolyte liquid, too large.

On the other hand, when the amount of oxygen was to be increased, then, the film-form rate was reduced, and oxygen was directly sprayed into the vapor stream to form, but a preparation of the silicon oxide film became difficult when the amount of oxygen was increased.

The negative electrode of Comparative Example 6 had a lower initial efficiency than the negative electrodes of Examples 1 to 3, due to making the oxygen rate O/Si to 1.3. This is considered that making the oxygen ratio O/Si to 1.3 caused too much loading materials in the negative electrode of Comparative Example 6.

In the negative electrode of Comparative Example 7, the cycle characteristics were significantly decreased. This is considered that the formation of a single layer by film-forming the silicon oxide film without running the roughened copper foil caused mitigating the expansion and contraction of the negative electrode impossible.

Examples 6 to 9 are examples to study effects on the battery characteristics due to crystallization of the silicon.

The negative electrodes of Examples 6 to 9 enabled an increase in the capacity than that of the negative electrode of Comparative Example 1 while maintaining the battery characteristics than those of Comparative Examples 2 to 7.

On the other hand, Example 2, in which the silicon was amorphous, was able to show superior battery characteristics than the negative electrodes of Examples 6 to 9, in which crystallization of the silicon was more advanced.

Examples 9 to 14 shown in Table 2 are examples that have a purpose of searching for the most suitable point by adjusting roughness Rz on the surfaces of the roughened copper foils as the negative electrodes current collectors.

From the results of Example 2, and Examples 9 to 14, the negative electrodes of Example 2 and Examples 10 to 13, in which the roughness Rz on the surface of the roughened copper foils were 1.5 um or more and 5.0 um or more, were able to show superior cycle characteristics than the negative electrode of Example 9, in which roughness Rz was less than 1.5 um, and that of Example 14, in which roughness Rz was more than 5.0 um. This is considered to be a result of the negative electrodes of Example 1 and Example 10 to 13, which had the roughness Rz on the surface of the roughened copper foils of 1.5 um or more and 5.0 um or more, thus the negative electrode active material layers were sufficiently supported by the roughened portions of the surface of the current collectors and suppressed exfoliation of the active material during charge and discharge more sufficiently.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A negative electrode comprising:
a negative electrode current collector having a surface roughened; and
a negative electrode active material layer provided on the negative electrode current collector,
wherein the negative electrode active material layer contains negative electrode active material particles including a compound of lithium, silicon, and oxygen,
a ratio, O/Si, of the oxygen to the silicon constituting the negative electrode active material particles is within a range of 0.8 or more to 1.2 or less,
the negative electrode active material layer has a multilayer structure composed of two or more layers, and
each layer of the multilayer structure of the negative electrode active material layer has, on an upper portion, a layer containing a quadrivalent silicon compound containing at least one or more of lithium and oxygen.

2. The negative electrode according to claim 1,
wherein the quadrivalent silicon compound includes one or more selected from SiO₂ and Li₄SiO₄.

3. The negative electrode according to claim 1 or 2,
wherein the negative electrode active material layer comprises:
the negative electrode active material particles; and
a composite compound, in which at least a carbon atom and an oxygen atom are chemically bonded, which is not alloyed with the negative electrode active material particles and which is filled among the negative electrode active material particles and in a surface layer of the negative electrode active material particles.

4. The negative electrode according to claim 3,
wherein the composite compound is a ring-opening decomposition product of a composite of an ether solvent with a polyphenylene compound or with a polycyclic aromatic compound, or a ring-opening decomposition product of a composite in which Li and the composite of the ether solvent with the polyphenylene compound or with the polycyclic aromatic compound forms a complex.

5. The negative electrode according to any one of claims 1 to 4,
wherein after at least 20 charge and discharge cycles, the negative electrode active material particles have the higher content of Si¹⁺ to Si³⁺ silicon compound states than anything else.

6. The negative electrode according to any one of claims 1 to 5,
wherein when the negative electrode active material particles are defined as primary particles, the negative electrode active material layer forms secondary particles, which are aggregates of the primary particles after charge and discharge, and the secondary particles have a form separated from each other in an in-plane direction.

7. The negative electrode according to any one of claims 1 to 6,
wherein the negative electrode active material particles have a peak attributed to a Si (111) crystal plane obtained by X-ray diffraction by using Cu-Kα radiation before charge and discharge, and a crystallite size corresponding to the crystal plane is 1.0 nm or less.

8. The negative electrode according to any one of claims 1 to 7,
wherein the negative electrode current collector has a ten-point mean roughness Rz of the surface between 1.5 um or more and 5.0 um or less.

9. A method for producing the negative electrode according to any one of claims 1 to 8, the method comprising the steps of:
winding the negative electrode current collector on a can roll having a curvature;
vapor-depositing a film containing silicon and/or silicon monoxide and having a multilayer structure composed of two or more layers on the negative electrode current collector, while the negative electrode current collector is running on the can roll,
forming layers having a multilayer structure and containing silicon dioxide on an upper portion of each layer by spraying a gas containing oxygen onto the film containing silicon and/or silicon monoxide; and
forming the negative electrode active material layer by doping the layers having the multilayer structure with lithium.

10. The method for producing the negative electrode according to claim 9,
wherein in the step of forming the layers having the multilayer structure, the layers having the multilayer structure are formed such that each layer contains the silicon oxide which includes the silicon dioxide,
in the step of forming the negative electrode active material layer, the layer having the multilayer structure is immersed in a solution containing lithium, thereby modifying the silicon oxide by a redox method to a compound having the lithium, the silicon, and the oxygen, and forming a composite compound, in which at least a carbon atom and an oxygen atom are chemically bonded, which is not alloyed with the negative electrode active material particles and which is filled among the negative electrode active material particles and in a surface layer of the negative electrode active material particles.
